# EUROPÄISCHE PATENTSCHRIFT

(11) **EP 0 610 223 B1**
(45) Veröffentlichungstag und Bekanntmachung des Hinweises auf die Patenterteilung: **06.12.1995**
(21) Anmeldenummer: 92918731.8
(22) Anmeldetag: 04.09.1992
(51) Int. Cl.: H01L 41/04

(54) **VERFAHREN ZUR REGELUNG DER FREQUENZ EINES WANDERWELLENMOTORS UND REGELEINRICHTUNG HIERZU**
PROCESS AND DEVICE FOR REGULATING THE FREQUENCY OF A TRAVELLING WAVE MOTOR
PROCEDE ET DISPOSITIF DE REGULATION DE LA FREQUENCE D'UN MOTEUR A ONDES PROGRESSIVES

(30) Priorität: 22.10.1991 DE 4134781
(43) Veröffentlichungstag der Anmeldung: 17.08.1994
(73) Patentinhaber: ROBERT BOSCH GMBH, 70442 Stuttgart (DE)
(72) Erfinder: BITZER, Rainer, D-7252 Weil der Stadt (DE); KRAMER, Claus, D-7122 Besigheim (DE); WINTER, Arnold, D-7024 Filderstadt-Bonlanden (DE)
(86) Internationale Anmeldenummer: DE9200749
(87) Internationale Veröffentlichungsnummer: WO9308607

(56) Entgegenhaltungen:
- EP-A- 0 366 496
- WO-A-91/08594
- DE-A- 3 835 090
- US-A- 4 914 337
- PATENT ABSTRACTS OF JAPAN vol. 11, no. 169 (E-511)(2616) 30. Mai 1987 & JP-A-62 02 869
- PATENT ABSTRACTS OF JAPAN vol. 14, no. 133 (E-902)(4076) 13. March 1990 & JP-A-13 21 876

## Beschreibung

### Stand der Technik

Die Erfindung geht aus von einem Verfahren zur Regelung der Frequenz eines Wanderwellenmotors der im Oberbegriff des Anspruchs 1 definierten Gattung.

Wanderwellenmotoren, auch Ultraschallmotoren genannt, sind bekannt und in ihrem Aufbau, ihrer Funktionsweise und ihren bevorzugten Einsatzmöglichkeiten beispielsweise in folgenden Literaturstellen beschrieben:

Schadebrod und Salomon "Der Piezo-Wanderwellenmotor - Antriebselement in der Aktorik, Neues Wirkungsprinzip" Industrie-Anzeiger 6/1991, Seite 32 - 34, Schadebrodt und Salomon "The Piezo Traveling Wave Motor - A New Element in Actuation", Control Engineering/Mai 1990, Seite 10 - 18, Yukihiko Ise, "Traveling Wave Ultrasonic Motors Offer High Conversion Efficiency, JEE, Juni 1986, Seite 66 - 70.

Zur Regelung des Wanderwellenmotors ist eine Zone des Piezorings im Stator als Sensorausgang kontaktiert. Diese Zone gibt eine Wechselspannung, die sog. Sensespannung oder "Sense" ab, die zur Regelung des Motors verwendet wird. Ziel des Frequenzregelverfahrens der eingangs genannten Art für den bekannten Wanderwellenmotor ist es, den Arbeitspunkt des Wanderwellenmotors im Resonanzbereich seiner Kennlinie zu halten, da er in diesem Arbeitsbereich seine maximale Leistung abgibt.

Bei einem bekannten Verfahren dieser Art wird hierzu die Sollgröße der Frequenz der Erregerwechselspannung mittels eines Sollwertgebers von Hand solange verändert, bis der Benutzer aufgrund der Drehzahlveränderung und Geräuschabgabe des Wanderwellenmotors erkennt, daß dieser sich im Resonanzbereich befindet. Dann wird die Sollgröße während des Betriebs unverändert gelassen. Dieser Einstellvorgang muß sowohl wegen der Exemplarstreuungen für jeden einzelnen Wanderwellenmotor durchgeführt werden, als auch bei jeder erneuten Inbetriebnahme des Wanderwellenmotors wiederholt werden, da sich der Arbeitspunkt im Stillstand des Wanderwellenmotors trotz unveränderter Sollgröße durch interne Vorgänge im Wanderwellenmotor verschiebt. Auch während des Betriebes liegt der optimale Arbeitspunkt nicht bei einer konstanten Frequenz, die zusätzlich noch Exemplarstreuungen unterworfen ist, sondern ist dem Driften verschiedener Parameter ausgesetzt, so daß die bekannte Frequenzregelung mit der konstanten Sollgrößenvorgabe nicht zu einem stabilen Arbeitspunkt im Leistungsmaximum des Wanderwellenmotors führt.

### Vorteile der Erfindung

Das erfindungsgemäße Verfahren mit den kennzeichnenden Merkmalen des Anspruchs 1 hat demgegenüber den Vorteil, daß die Sollerregerfrequenz nicht starr eingestellt sondern dem jeweiligen Betriebszustand des Wanderwellenmotors angepaßt wird. Die hierzu herangezogene Amplitudenmodulation des Sensesignals entsteht durch Schwingungen des Wanderwellenmotors beim Überschreiten des Resonanzpunktes und beim Betrieb in unmittelbarer Nähe dieses Resonanzpunktes. Diese Amplitudenmodulation wird erfindungsgemäß dazu benutzt, die Sollerregerfrequenz so einzuregeln, daß der Wanderwellenmotor immer im Arbeitspunkt maximaler Leistung arbeitet.

Gemäß einer bevorzugten Ausgestaltung des erfindungsgemäßen Verfahrens wird hierzu das amplitudenmodulierte Sensesignal demoduliert, gleichgerichtet und mit einem vorgegebenen Grenzwert, der einem Amplitudenmodulations-Sollwert entspricht, verglichen. Die Vergleichsdifferenz wird einem Regler zugeführt, dessen am Ausgang abgenommene Stellgröße als Sollpröße verwendet wird. Dadurch entsteht ein überlagerter Frequenzregelkreis, der ein Stellsignal erzeugt, das anstelle der manuellen Sollfrequenzeinstellung beim bekannten Frequenzregelkreis verwendet wird. Dieser überlagerte Frequenzregelkreis bringt nun den Vorteil, daß der Wanderwellenmotor trotz verschiedenster Einflußgrößen und deren Driften immer auf den optimalen Arbeitspunkt im Arbeitsbereich eingeregelt wird.

Durch das erfindungsgemäße Verfahren wird der Wanderwellenmotor auch ungeachtet von Exemplarstreuungen auf diesem Arbeitspunkt maximaler Leistung eingeregelt. Paarungsund Abgleichprobleme werden gleichermaßen vermieden. Ein Einstellvorgang bei der Inbetriebnahme des Wanderwellenmotors ist überflüssig und wird durch den überlagerten Frequenzregelkreis selbsttätig vorgenommen.

Ein zweckmäßige Regeleinrichtung zur Durchführung des erfindungsgemäßen Frequenzregelverfahrens ist in Anspruch 4 angegeben.

### Zeichnung

Das erfindungsgemäße Verfahren ist anhand eines in der Zeichnung dargestellten Ausführungsbeispiels einer Frequenzregeleinrichtung in der nachfolgenden Beschreibung näher erläutert. Es zeigen:
- Fig. 1: ein Blockschaltbild einer Regeleinrichtung zur Frequenzregelung eines Wanderwellenmotors,
- Fig. 2: ein Diagramm der Übertragungskennlinie des Stators des Wanderwellenmotors.

### Beschreibung des Ausführungsbeispiels

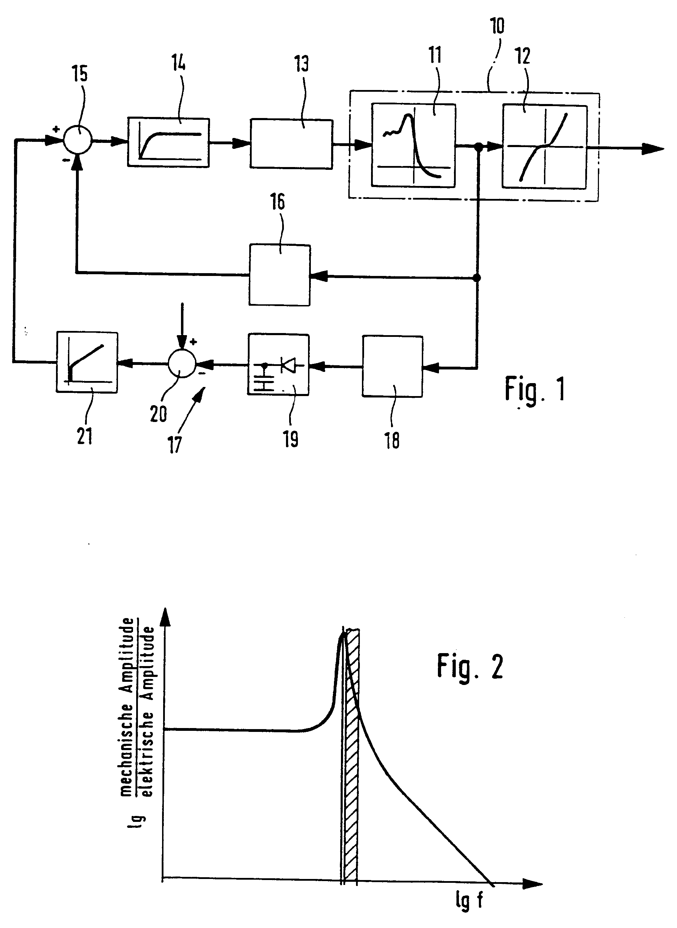

In der in Fig. 1 im Blockschaltbild dargestellten Regeleinrichtung für einen insgesamt mit 10 bezeichneten Wanderwellenmotor ist mit 11 der Stator und mit 12 der Rotor des Wanderwellenmotors 10 schematisch angedeutet, wobei in dem den Stator 11 und Rotor 12 jeweils verkörpernden Block das jeweilige Übertragungsverhalten als Kennlinie dargestellt ist. Aufbau und Wirkungsweise des Wanderwellenmotors 10 sind in den eingangs angegebenen Literaturstellen ausführlich beschrieben. Kurzgefaßt besteht der Wanderwellenmotor 10 aus dem scheibenförmigen Stator 11 mit einem daran befestigten Piezoring und dem an dem Piezoring über eine Reibschicht angepreßten scheibenförmigen Rotor 12. Der hier nicht dargestellte Piezoring trägt zwei Gruppen von sich abwechselnden, polarisierten piezoelektrischen Zonen, die mit um 90° gegeneinander phasenverschobenen Wechselspannungen erregt werden. Auf dem Piezoring der Statorscheibe 11 ist eine Zone als Sensorausgang kontaktiert. An dieser Zone wird eine Wechselspannung, die sog. Sensespannung oder "Sense" abgegriffen. Das Übertragungsverhalten des Stators 11 ist in Fig. 2 dargestellt. Es zeigt in logarithmischer Darstellung den Amplitudengang (Verhältnis der mechanischen Amplitude zur elektrischen Amplitude) über der Erregerfrequenz des Stators 11. Deutlich ist die Resonanzüberhöhung zu sehen. Der Wanderwellenmotor 10 wird nunmehr mit einer solchen Erregerfrequenz betrieben, das sein Arbeitsbereich im Resonanzteil der Kennlinie liegt. Dieser Arbeitsbereich ist in Fig. 2 schraffiert dargestellt. Innerhalb dieses Arbeitsbereiches gibt es einen Arbeitspunkt, in dem der Wanderwellenmotor 10 sein Leistungsmaximum erreicht. Ziel des nachfolgend beschriebenen Frequenzregelverfahrens ist es, im Leistungsmaximum einen stabilen Arbeitspunkt des Wanderwellenmotors 10 sicherzustellen.

Hierzu wird aus der Sensespannung eine der Istfrequenz der Erregerwechselspannung proportionale Istgröße gewonnen und mit einer der Sollfrequenz proportionalen Sollgröße verglichen. Die Regelabweichung zwischen Sollgröße und Istgröße wird einem geeigneten Regelalgorithmus unterzogen und damit die Erregerfrequenz korrigiert. Versuche haben gezeigt, daß bei der Vorgabe einer festen Sollgröße infolge von Driften verschiedener Parameter des Wanderwellenmotors 10 dessen Arbeitspunkt im Arbeitsbereich nicht stabil gehalten werden kann. Aus diesem Grund wird hier die Sollgröße nicht fest vorgegeben, sondern in einem überlagerten Regelkreis zusätzlich ausgeregelt. Hierzu wird die auf der Sensespannung liegende Amplitudenmodulation, die durch das Schwingen des Wanderwellenmotors 10 in unmittelbarer Nähe des Resonanzpunktes hervorgerufen wird, demoduliert, gleichgerichtet und mit einem vorgegebenen Amplitudenmodulations-Sollwert verglichen. Die Vergleichsdifferenz wird einem Regler zugeführt, dessen am Ausgang abgenommenes Stellsignal nunmehr die der Sollfrequenz proportionaler Sollgröße darstellt. Der Amplitudenmodulations-Sollwert wird dabei in Abhängigkeit von der Elastizität der im Wanderwellenmotor 10 vorhandenen Reibschicht und der Anpreßkraft zwischen Rotor 12 und Stator 11 bestimmt.

Dieses Frequenzregelverfahren wird mit der in Fig. 1 dargestellten Regeleinrichtung durchgeführt. Dabei wird die Erregerwechselspannung des Wanderwellenmotors 10 von einem spannungsgesteuerten Oszillator 13 geliefert, dessen Oszillatorfrequenz durch eine an seinem Steuereingang liegende Steuergleichspannung einstellbar ist. Dem Steuereingang des Oszillators 13 ist ein erster Regler 14 vorgeschaltet, der hier als PT₁-Regler ausgebildet ist, aber auch ein anderes geeignetes Regelverhalten aufweisen kann. Dem ersten Regler 14 ist ein erster Differenzbildner 15 vorgeschaltet, an dessen invertierenden Eingang der Spitzgleichrichtwert der am Piezoring abgenommenen Sensespannung liegt. Dieser Spitzgleichrichtwert wird durch einen Spitzengleichrichter 16 aus der Sensespannung gewonnen. An dem nicht invertierenden Eingang des Differenzbildners 15 liegt ebenfalls eine Gleichspannung, die von dem insgesamt mit 17 bezeichneten überlagerten Regelkreis geliefert wird. Dieser Regelkreis 17 besteht aus einem Amplituden-Demodulator 18, dem die amplitudenmodulierte Sensespannung zugeführt wird, einer dem Amplituden-Demodulator 18 nachgeschalteten Gleichrichterstufe 19, die eine dem Modulationshub der Sensespannung proportionale Gleichspannung liefert, einem zweiten Differenzbildner 20 und einem diesem nachgeschalteten zweiten Regler 21, dessen Ausgang an dem nicht invertierenden Eingang des ersten Differenzbildners 15 angeschlossen ist. Die Ausgangsspannung der Gleichrichterstufe 19 ist dabei dem invertierendem Eingang des zweiten Differenzbildners 20 zugeführt, während an dessen nicht invertierenden Eingang der Amplitudenmodulations-Sollwert liegt. Der zweite Regler 21 ist hier als PI-Regler ausgeführt, kann aber auch eine anderes geeignetes Regelverhalten aufweisen. Die Stellgröße des zweiten Reglers 21 ist die Sollgröße für den Grundregelkreis. Durch den überlagerten Frequenzregelkreis 17 wird nunmehr die Sollgröße des Grundregelkreises zusätzlich geregelt und nicht starr gehalten. Dadurch wird trotz verschiedenster Einflußgrößen und deren Driften der Wanderwellenmotor 10 stets auf den Arbeitspunkt maximaler Leistung eingeregelt.

## Patentansprüche

1. Verfahren zur Regelung der Frequenz eines Wanderwellenmotors (10), der einen scheibenförmigen Stator (11) mit daran befestigtem Piezoring und einen an dem Piezoring über eine Reibschicht angepreßten scheibenförmigen Rotor (12) aufweist, wobei der Piezoring zwei Gruppen von sich abwechselnden piezoelektrischen Zonen trägt, die mit um 90° gegeneinander phasenverschobenen Wechselspannungen erregt werden, bei welchem aus der Amplitude einer am Stator des Wanderwellenmotors abgegriffenen Wechselspannung (Sensespannung) eine der Istfrequenz proportionale Istgröße gewonnen, mit einer der Sollfrequenz proportionalen Sollgröße verglichen und mit der einem geeigneten Regelalgorithmus unterzogenen Regelabweichung die Frequenz der Erregerwechselspannung korrigiert wird, dadurch gekennzeichnet, daß die Sollgröße aus der Amplitudenmodulation der Sensespannung abgeleitet wird.

2. Verfahren nach Anspruch 1, dadurch gekennzeichnet, daß die amplitudenmodulierte Sensespannung demoduliert, gleichgerichtet und mit einem vorgegebenen Amplitudenmodulations-Sollwert verglichen wird und daß die Vergleichsdifferenz einem Regler (21) zugeführt wird, dessen am Ausgang abgenommenes Stellsignal als Sollgröße verwendet wird.

3. Verfahren nach Anspruch 2, dadurch gekennzeichnet, daß der Amplitudenmodulations-Sollwert abhängig von der Elastizität der Reibschicht zwischen Stator (11) und Rotor (12) und der Anpreßkraft zwischen beiden bestimmt wird.

4. Regeleinrichtung zur Durchführung des Regelverfahrens nach Anspruch 2 oder 3, gekennzeichnet durch einen die Erregerwechselspannung für den Wanderwellenmotor (10) liefernden spannungsgesteuerten Oszillator (13), dessen Oszillatorfrequenz durch eine an seinem Steuereingang liegende Steuergleichspannung einstellbar ist, durch einen dem Oszillator (13) vorgeschalteten ersten Regler (14), dem die in einem ersten Differenzbildner (15) ermittelte Regelabweichung zwischen einer aus der Amplitude der Sensespannung abgeleiteten Ist-Gleichspannung und einer Soll-Gleichspannung zugeführt ist und dessen Ausgang an dem Steuereingang des Oszillators (13) liegt, durch einen Amplituden-Demodulator (18), dem die Sensespannung zugeführt ist, durch eine Gleichrichterstufe (19), die eine den Modulationshub proportionale Gleichspannung liefert, durch einen zweiten Differenzbildner (20), dem einerseits die Differenzspannung der Gleichrichterstufe (19) und andererseits eine dem AmplitudenmodulationsSollwert entsprechende Vorgabespannung zugeführt ist und dessen Ausgangsspannung an dem Eingang des einen zweiten Regler (21) darstellenden Reglers liegt, und dadurch, daß das Ausgangssignal des zweiten Reglers (21) die dem ersten Differenzbildner (15) zugeführte Soll-Gleichspannung darstellt.

5. Regeleinrichtung nach Anspruch 4, dadurch gekennzeichnet, daß der zweite Regler (21) ein PI-Regler ist.

6. Regeleinrichtung nach Anspruch 4 oder 5, dadurch gekennzeichnet, daß der erste Regler (14) ein PT₁-Regler ist.

## Claims

1. Method for regulating the frequency of a travelling wave motor (10) which has a stator (11), which is in the form of a disc and has a piezo-ring attached to it, and a rotor (12) which is in the form of a disc and is pressed against the piezo-ring via a friction layer, the piezo-ring being fitted with two groups of mutually alternating piezoelectric zones which are excited by AC voltages which are phase-shifted through 90° with respect to one another, in the case of which an actual variable which is proportional to the actual frequency is obtained from the amplitude of an AC voltage (sense voltage) which is picked off on the stator of the travelling wave motor, is compared with a required variable which is proportional to the required frequency, and the frequency of the exciter AC voltage is corrected using the control error, after subjecting it to a suitable control algorithm, characterized in that the required variable is derived from the amplitude modulation of the sense voltage.

2. Method according to Claim 1, characterized in that the amplitude-modulated sense voltage is demodulated, rectified and compared with a predetermined amplitude-modulation required value, and in that the comparison difference is fed to a regulator (21) whose actuating signal, which is picked off at the output, is used as the required variable.

3. Method according to Claim 2, characterized in that the amplitude-modulation required value is determined as a function of the elasticity of the friction layer between the stator (11) and the rotor (12) and the contact-pressure force between them.

4. Regulating device for carrying out the regulating method according to Claim 2 or 3, characterized by a voltage-controlled oscillator (13) which supplies the exciter AC voltage for the travelling wave motor (10) and whose oscillator frequency can be adjusted by means of a control DC voltage which is applied to its control input, by a first regulator (14) which is connected upstream of the oscillator (13) and to which the control error, which is determined in a first subtractor (15), between an actual DC voltage, derived from the amplitude of the sense voltage, and a required DC voltage is fed and whose output is connected to the control input of the oscillator (13), by an amplitude demodulator (18) to which the sense voltage is fed, by a rectifier stage (19) which supplies a DC voltage which is proportional to the modulation level, by a second subtractor (20) to which on the one hand the difference voltage of the rectifier stage (19) and on the other hand a preset voltage, which corresponds to the amplitude-modulation required value, are fed and whose output voltage is applied to the input of the regulator, which represents a second regulator (21), and characterized in that the output signal of the second regulator (21) represents the required DC voltage which is fed to the first subtractor (15).

5. Regulating device according to Claim 4, characterized in that the second regulator (21) is a PI regulator.

6. Regulating device according to Claim 4 or 5, characterized in that the first regulator (14) is a PT₁ regulator.

## Revendications

1. Procédé de régulation de la fréquence d'un moteur à onde progressive (10) ayant un stator (11) en forme de disque portant solidairement une bague piézo-électrique et un rotor (12) en forme de disque, pressé contre l'anneau piézo-électrique par l'intermédiaire d'une couche de frottement, l'anneau piézo-électrique portant deux groupes de zones piézo-électriques alternées, et qui sont excitées par des tensions alternatives déphasées l'une de l'autre de 90°, et à partir de l'amplitude d'une tension alternative prise sur le stator du moteur à onde progressive (tension de capteur) on forme une grandeur réelle proportionnelle à la fréquence réelle, on compare cette grandeur à une grandeur de consigne proportionnelle à la fréquence de consigne et on corrige la fréquence de la tension alternative d'excitation par la déviation de régulation soumise à un algorithme de régulation approprié, et on déduit la grandeur de consigne de la modulation d'amplitude de la tension de capteur.

2. Procédé selon la revendication 1, caractérisé en ce qu'on démodule la tension de capteur modulée en amplitude, on la redresse et on la compare à une valeur de consigne à modulation d'amplitude, prédéterminée et on applique la différence de comparaison à un régulateur (21) dont le signal de réglage fourni en sortie est utilisé comme grandeur de consigne.

3. Procédé selon la revendication 2, caractérisé en ce qu'on détermine la grandeur de consigne à modulation d'amplitude en fonction de l'élasticité de la couche de frottement entre le stator (11) et le rotor (12) et de la force de compression entre ces deux parties.

4. Installation de régulation pour la mise en oeuvre du procédé de régulation selon la revendication 2 ou 3, caractérisée par un oscillateur (13) commandé en tension, fournissant une tension alternative d'excitation pour le moteur à onde progressive (10), dont la fréquence d'oscillation se règle par une tension de réglage appliquée à son entrée de commande, par un premier régulateur (14) en amont de l'oscillateur (13), recevant la déviation de réglage formée dans un premier générateur de différence (15), entre une tension réelle déduite de l'amplitude de la tension de capteur et une tension continue de consigne, et dont la sortie est appliquée à l'entrée de commande de l'oscillateur (13), par un démodulateur d'amplitude (18) recevant la tension de capteur, par un étage redresseur (19) qui fournit une tension continue proportionnelle à la course de modulation, par un second générateur de différence (20) recevant d'une part la tension de différence de l'étage redresseur (19) et d'autre part une tension prédéterminée correspondant à la valeur de consigne de modulation d'amplitude et dont la tension de sortie est reliée à l'entrée d'un second régulateur (21) constituant le régulateur et en ce que le signal de sortie du second régulateur (21) représente la tension continue de consigne appliquée au premier générateur de différence (15).

5. Installation de régulation selon la revendication 4, caractérisée en ce que le second régulateur (21) est un régulateur (PI).

6. Installation de régulation selon la revendication 4 ou 5, caractérisée en ce que le premier régulateur (14) est un régulateur (PT1).
